# FASCICULE DE BREVET EUROPEEN

(11) **EP 0 488 890 B1**
(45) Date de publication et mention de la délivrance du brevet: **04.05.1994**
(21) Numéro de dépôt: 91403215.6
(22) Date de dépôt: 27.11.1991
(51) Int. Cl.: G21C 11/06, G21C 5/08, G21C 15/10

(54) **Réacteur nucléaire à eau sous pression et à cloisonnement massif**
Druckwasserkernreaktor mit massiver Spaltzonenumfassung
Nuclear pressure water reactor having a massive core shroud

(30) Priorité: 30.11.1990 FR 9015051
(43) Date de publication de la demande: 03.06.1992
(73) Titulaire: FRAMATOME, 92400 Courbevoie (FR)
(72) Inventeur: Chevereau, Gérard, F-93340 Le Raincy (FR)
(74) Mandataire: Fort, Jacques

(56) Documents cités:
- EP-A- 0 323 306
- US-A- 3 252 868

## Description

La présente invention concerne les réacteurs nucléaires à eau sous pression du type comportant un coeur constitué par des assemblages de forme prismatique disposés côte à côte à l'intérieur d'une enveloppe de coeur cylindrique à axe vertical ménageant entre le coeur et l'enveloppe un espace dans lequel est disposé un cloisonnement massif.

Elle concerne plus particulièrement les réacteurs du type dont le cloisonnement massif est constitué par un empilement vertical d'anneaux entourant le coeur, dont la périphérie extérieure s'engage avec jeu dans l'enveloppe et dont la périphérie intérieure épouse le contour extérieur du coeur, lesdits anneaux étant centrés par rapport à l'enveloppe de coeur (par exemple par des clavettes fixées sur l'enveloppe et faisant saillie dans des rainures verticales des anneaux) et étant percés de trous verticaux alignés définissant des canaux de refroidissement contenant des bouchons laissant subsister des passages étranglés de circulation.

Dans un tel réacteur, la circulation de l'eau de refroidissement est mieux organisée que dans ceux antérieurement connus. En particulier l'utilisation de passages annulaires étroits de circulation permet de réduire le volume d'eau dans le cloisonnement pour une efficacité de refroidissement donné et en conséquence permet d'augmenter le pouvoir réflecteur.

Dans le réacteur du type ci-dessus qui est décrit à titre d'exemple dans le document EP-A-0 323 306, une chambre d'équilibrage est ménagée entre deux bouchons successifs et met en communication les passages annulaires autour de ces bouchons. Cette chambre doit avoir une hauteur faible, pour ne pas représenter un volume d'eau important réduisant le pouvoir réflecteur. En conséquence, il ne s'y produit pas une homogénéisation de température. Or l'absorption gamma, et donc la dissipation de chaleur par unité de volume dans le cloisonnement, est maximum à proximité de la frontière entre le cloisonnement et le coeur et diminue ensuite rapidement dans le sens radial. Le mélange insuffisant des filets fluides de la nappe annulaire d'eau conduit à un échauffement de l'eau et du cloisonnement beaucoup plus élevé dans les zones les plus proches de la frontière.

Pour que la température maximale du cloisonnement dans ces zones reste acceptable, un débit élevé de refroidissement est nécessaire. Il conduit à un surdimensionnement des pompes et à un risque de réduction du débit dans les assemblages périphériques du coeur.

L'invention vise à fournir un réacteur du type ci-dessus défini comportant un cloisonnement muni d'un circuit de refroidissement réduisant, à débit et volume d'eau donnés dans le cloisonnement, la température maximale et les écarts de température.

Dans ce but l'invention propose notamment un réacteur suivant la revendication 1. Les canaux sont avantageusement ménagés entre des dents hélicoïdales ou du moins obliques.

L'eau prend ainsi, dans les passages annulaires successifs, un mouvement hélicoïdal qui fait passer successivement les filets d'eau dans des zones à dissipation thermique élevée et dans des zones à dissipation thermique faible. On réduit ainsi les différences de température, donc les dilatations thermiques différentielles et les gonflements différentiels sous irradiation neutronique (ces gonflements dépendant de la température). Par voie de conséquence on réduit les déformations des anneaux.

L'invention sera mieux comprise à la lecture de la description qui suit d'un mode particulier d'exécution, donné à titre d'exemple non limitatif. La description se réfère aux dessins qui l'accompagnent, dans lesquels :
- la figure 1 est une vue en coupe verticale d'une fraction de cloisonnement suivant un mode particulier de réalisation de l'invention ;
- les figures 2 et 3 sont des vues en coupe suivant les lignes II-II et III-III, respectivement, de la figure 1.

Le cloisonnement de coeur qui sera maintenant décrit est destiné à un réacteur nucléaire à eau sous pression présentant une constitution générale comparable à celle du réacteur décrit dans le document EP-A-0 323 306, auquel on pourra se reporter. Un tel réacteur nucléaire comprend une cuve cylindrique munie d'un couvercle de fermeture. Une enveloppe cylindrique 12 située à l'intérieur de la cuve définit avec elle un passage annulaire à travers lequel l'eau admise dans la cuve descend jusqu'au fond du réacteur avant de remonter dans le coeur. Ce coeur est constitué par des assemblages combustibles juxtaposés reposant sur une plaque inférieure de coeur 13 et surmonté d'une plaque 15.

Le coeur est constitué d'assemblages juxtaposés, à section droite hexagonale ou carrée. Si les assemblages ont une section carrée, la périphérie du coeur a une section droite à facettes orientées suivant deux directions perpendiculaires.

Un cloisonnement 16 occupe pratiquement tout le volume de l'espace annulaire compris entre la surface externe du coeur et la face interne de l'enveloppe 12. Il est constitué par un empilement d'anneaux 18 dont la section a une périphérie interne épousant le contour extérieur du coeur et une périphérie externe circulaire. Le diamètre de cette périphérie externe est choisi de façon qu'un jeu j subsiste entre l'enveloppe 12 et le cloisonnement. Le nombre d'anneaux constituant le cloisonnement est choisi de façon que la masse unitaire des anneaux ne dépasse pas les possibilités de fabrication et de manutention disponibles. Pour un diamètre de 4 m environ, on pourra constituer le cloisonnement 16 en cinq ou six anneaux 18₁-18₆.

Les anneaux sont centrés et orientés dans l'enveloppe 12 par des clavettes (non représentées) qui peuvent avoir la disposition décrite dans le brevet FR 87 17923 et laissent subsister des jeux de circulation d'eau de refroidissement.

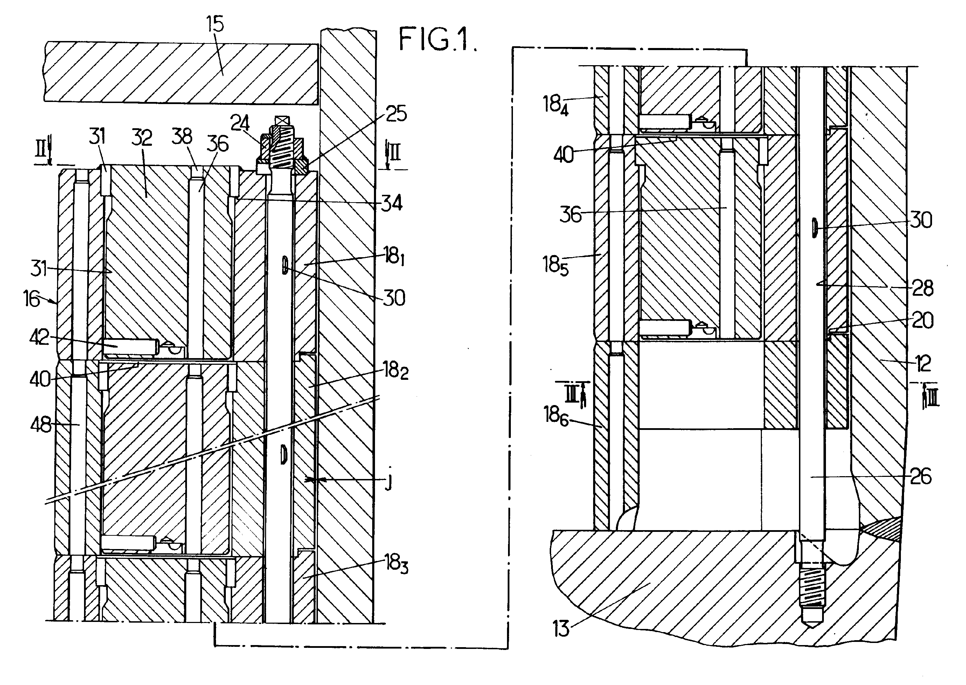

Le centrage des anneaux les uns par rapport aux autres peut être complété par emboîtement des anneaux les uns dans les autres en leur donnant un redan annulaire tel que celui représenté en 20 sur la figure 1.

Dans le mode de réalisation illustré, des poteaux verticaux 26 fixés par vissage à la plaque inférieure de coeur 13 traversent des passages 28 alignés, ménagés dans tous les anneaux 18₁-18₆. Le diamètre des passages 28 est tel qu'un jeu de circulation d'eau de refroidissement subsiste autour des poteaux. Pour que ce jeu soit régulier, les poteaux sont avantageusement munis d'ailettes de centrage 30. Les clavettes, les poteaux 26 et éventuellement l'emboîtement des anneaux 18₁-18₆ garantissent une grande précision de mise en place. Des écrous 24, immobilisés en rotation après serrage, pressent des rondelles 25, percées de passages d'eau, sur l'anneau 18₁ et maintiennent les anneaux appliqués les uns contre les autres.

Le cloisonnement 16 présente, du fait de la forme irrégulière de la périphérie du coeur, des parties particulièrement épaisses. Elles sont refroidies par circulation d'eau dans un passage annulaire ménagé entre des bouchons 32 et des trous cylindriques qui les reçoivent, ménagés dans les anneaux.

Dans le mode de réalisation montré, à titre de simple exemple, en figure 1, seuls les anneaux 18₁-18₅ portent des bouchons 32, alignés les uns avec les autres. Dans l'anneau 18₆ est ménagée une chambre de répartition d'eau.

Chaque bouchon 32 est muni d'une couronne 31 qui repose sur un épaulement 34 ménagé dans l'anneau correspondant. La couronne est usinée de façon à dévier les filets d'eau qui la traversent et à donner un mouvement hélicoïdal à la nappe annulaire d'eau de refroidissement circulant autour des bouchons. Pour cela, on peut donner à la couronne une denture sensiblement hélicoïdale, de profondeur suffisante pour laisser subsister une communication avec le jeu annulaire. L'eau circule ainsi, à partir d'une chambre d'équilibrage 40 prévue entre deux bouchons successifs, par un jeu annulaire, puis par les canaux délimités par les dents de la couronne. Une pente d'environ 15° donnera souvent des résultats satisfaisants.

Pour réduire les pertes de charge à l'entrée des canaux, les bouchons présentent avantageusement un rétrécissement profilé immédiatement au-dessous de la couronne.

Il suffit de donner aux chambres d'équilibrage 40 une hauteur de quelques millimètres. Les couronnes peuvent avoir 30 à 40 mm d'épaisseur. Des jeux annulaires d'environ 3 mm au rayon seront généralement satisfaisants.

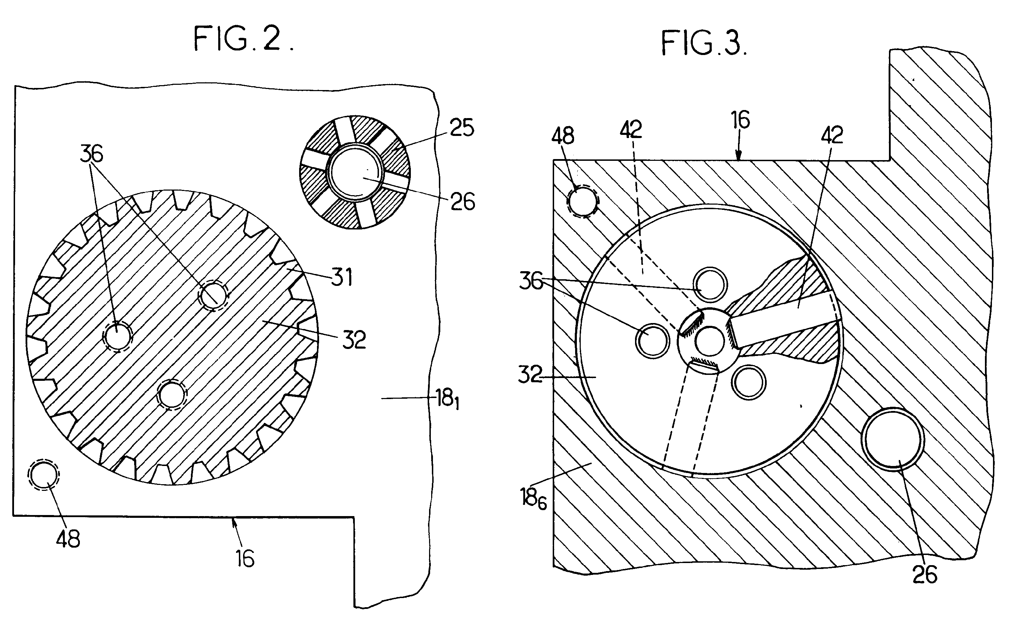

Pour maintenir un jeu radial régulier, chaque bouchon est avantageusement muni, à sa partie inférieure, d'éléments de centrage. Ils sont constitutés, dans le cas illustré sur les figures 1 et 3, par trois pions 42 orientés radialement et répartis à intervalle de 120°. Le bouchon est ainsi centré par la couronne à sa partie supérieure, par les pions à sa partie inférieure. Ces pions sont bloqués, après mise en place, par des cordons de soudure. Les bouchons peuvent eux aussi être bloqués par des cordons de soudure, après montage, pour éviter tout déplacement.

Dans le mode de réalisation représenté, qui présente un intérêt particulier lorsque les bouchons ont un diamètre important, un trajet supplémentaire de refroidissement est constitué par des passages verticaux 36 dans les bouchons ; ces passages ont une zone étranglée 38 dont le diamètre est choisi pour fournir une perte de charge d'ajustage du débit. Les passages axiaux 36 sont répartis pour tenir compte des besoins de refroidissement : sur la figure 2 ces passages sont plus rapprochés les uns des autres à proximité de la frontière avec le coeur.

Des perçages supplémentaires 48 peuvent être ménagés directement dans les anneaux, à proximité de la frontière, pour compléter le refroidissement et homogénéiser la température du cloisonnement.

La disposition qui vient d'être décrite permet, sur un réacteur qu'on peut considérer comme représentatif, d'avoir un échauffement moyen de l'eau de 10°C sur la hauteur totale du coeur, avec de faibles variations suivant les emplacements, en ne faisant passer dans le cloisonnement que 2% environ du débit total fourni par les pompes. En l'absence de mélange, la température de l'eau du côté le plus proche de la frontière avec le coeur peut augmenter de 17° sur toute la hauteur du coeur, tandis qu'elle n'augmente que de 3°C du côté opposé : le gain de 7°C obtenu sur la température maximale de l'eau et donc du cloisonnement au point le plus chaud d'un anneau, pour un débit d'eau de refroidissement et un volume d'eau dans le coeur donnés, représente un avantage important.

## Revendications

1. Réacteur nucléaire à eau sous pression comportant un coeur constitué par des assemblages de forme prismatique disposés côte à côte à l'intérieur d'une enveloppe de coeur (12) cylindrique à axe vertical ménageant entre le coeur et l'enveloppe un espace dans lequel est disposé un cloisonnement massif (16) formé par un empilement vertical d'anneaux (18) entourant le coeur, dont la périphérie extérieure s'engage avec jeu dans l'enveloppe (12) et dont la périphérie intérieure épouse le contour extérieur du coeur, lesdits anneaux étant centrés par rapport à l'enveloppe de coeur et étant percés de trous verticaux alignés définissant des canaux de refroidissement contenant des bouchons (32) laissant subsister des passages annulaires étranglés de circulation,
certains au moins des bouchons (32) comportant une couronne d'appui sur un épaulement (34) d'un anneau correspondant, usinée pour délimiter des canaux caractérisé en ce que lesdits canaux sont inclinés sur la verticale de façon à donner une composante de vitesse circonférentielle à l'eau circulant le long des passages annulaires.

2. Réacteur selon la revendication 1, caractérisé en ce que ladite couronne est munie d'une denture sensiblement hélicoïdale de profondeur suffisante pour laisser subsister une communication avec le jeu annulaire et constituer les dits canaux.

3. Réacteur selon la revendication 1 ou 2, caractérisé en ce que chaque bouchon est muni, à sa partie inférieure, de pions radiaux (42) de centrage.

## Patentansprüche

1. Druckwasserkernreaktor mit einem Reaktorkern, der prismenförmige Brennelementkassetten aufweist, die nebeneinander im Inneren einer zylinderförmigen Reaktorkernhülle (12) mit vertikaler Achse angeordnet sind, wobei zwischen dem Kern und der Hülle ein Raum liegt, in dem eine massive Wandung (16) in Form eines vertikalen Stapels von Ringen (18), die den Kern umgeben, angeordnet ist, deren äußere Peripherie mit Spiel in der Umhüllung (12) eingreift und deren innere Peripherie die äußere Kontur des Reaktorkerns annimmt, wobei die Ringe bezüglich der Kernhülle zentriert sind und mit vertikalen ausgerichteten Löchern durchbohrt sind, die Kühlkanäle bilden und Verschlüsse (32) aufweisen, die nur einen begrenzten ringförmigen Zirkulationsquerschnitt freilassen, wobei mindestens einige bestimmte der Verschlüsse (32) eine Auflagekrone auf einer Schulter (34) eines entsprechenden Rings aufweisen, die eingearbeitet ist, um Kanäle zu begrenzen,
**dadurch gekennzeichnet**,
daß die Kanäle gegenüber der Vertikalen so geneigt sind, daß sie dem entlang der ringförmigen Passagen zirkulierenden Wasser eine Geschwindigkeitskomponente in Umfangsrichtung geben.

2. Reaktor nach Anspruch 1,
dadurch gekennzeichnet,
daß die Krone mit einer spiralförmigen Verzahnung versehen ist, die hinreichend tief ist, um eine Verbindung mit dem ringförmigen Spiel bestehen zu lassen und die die besagten Kanäle bildet.

3. Reaktor nach Anspruch 1 oder 2,
dadurch gekennzeichnet,
daß jeder Verschluß an seinem unteren Teil mit radialen Zentrierstiften (42) versehen ist.

## Claims

1. Pressurized water nuclear reactor comprising a core constituted by prismatic shaped assemblies disposed side by side inside a cylindrical casing (12) having a vertical axis and defining, between the core and the casing, a space accommodating a solid partitioning (16) formed as a vertical stack of rings (18) surrounding the core, whose external periphery is received in the casing (12) with a clearance and whose internal periphery matches the external contour of the core, said ring being centered with respect to the core casing and being formed with mutually aligned vertical passages which define cooling channels which contain plugs (32) which reserve restricted annular flow passages, at least some of the plugs (32), each having a flange bearing on a shoulder (34) of a respective ring, the flange being machined for defining channels,
characterized in that said channels are slanted with respect to the vertical direction so as to give a circumferential speed component to the water flowing along the annular passages.

2. Reactor according to claim 1,
characterized in that said flange has a set of substantially helical teeth of sufficient depth to allow communication with the annular space and to form said channels.

3. Reactor according to claim 1 or 2,
characterized in that each plug has radial centering pins (42) at the lower part thereof.
